# EUROPÄISCHE PATENTSCHRIFT

(11) **EP 2 455 255 B1**
(45) Veröffentlichungstag und Bekanntmachung des Hinweises auf die Patenterteilung: **02.03.2016**
(21) Anmeldenummer: 11182711.9
(22) Anmeldetag: 26.09.2011
(51) Int. Cl.: B60N 2/015, B60N 2/68, B60N 2/36

(54) **Außenscharnier mit einem geräuschdämpfenden Lagerelement**
Outer hinge with a sound-dampening bearing element
Charnière extérieure dotée d'un élément de support silencieux

(30) Priorität: 17.11.2010 DE 102010051451
(43) Veröffentlichungstag der Anmeldung: 23.05.2012
(73) Patentinhaber: Ferd. von Hagen Söhne & Koch GmbH & Co. KG, 42329 Wuppertal (DE)
(72) Erfinder: Reimann, Ingo, 42579 Heiligenhaus (DE)
(74) Vertreter: Müller, Karl-Ernst

(56) Entgegenhaltungen:
- DE-B4- 10 133 707
- DE-C1- 10 215 224
- FR-A1- 2 871 865

## Beschreibung

Die Erfindung betrifft ein Außenscharnier zur schwenkbaren Halterung der Rückenlehne eines Fahrzeugsitzes an einem fahrzeugfesten Teil, bei welchem an der Rückenlehne eine Drehachse zu deren Verschwenkung befestigt ist, die in ein eine einseitig offene Lageröffnung aufweisendes, an dem Fahrzeug zu befestigendes Aufnahmeteil einsetzbar und darin mittels einer die offene Seite der Lageröffnung übergreifenden und zwischen einer Freigabestellung und einer Verriegelungsposition schwenkbaren Sperre verriegelbar ist, wobei in dem Aufnahmeteil ein in die Lageröffnung führender Einführschlitz für die Drehachse ausgebildet ist.

Ein Außenscharnier mit den vorgenannten Merkmalen ist in der DE 101 33 707 B4 beschrieben. Die Drehachse ist als an der Rückenlehnenstruktur angebrachter Bolzen ausgebildet, der bei der Montage der Rückenlehne beziehungsweise des Fahrzeugsitzes in den Einführschlitz des Aufnahmeteils hineingedrückt wird. Soweit zur Verriegelung des Bolzens in dem Aufnahmeteil an dem Aufnahmeteil eine drehbare Sperre mit einem den in der Lageröffnung des Aufnahmeteils liegenden Bolzen übergreifenden Haken angeordnet ist, ist die Sperre mit einem an ihr ausgebildeten Ansatz ausgestaltet derart, dass beim Einführen des Bolzens in den in die Lageröffnung führenden Einführschlitz die Sperre durch Druck auf ihren Ansatz selbsttätig in die Verriegelungsposition verschwenkt wird. Damit ist eine Art Rastmontage der Rückenlehne an dem Aufnahmeteil möglich.

Soweit bei in der Lageröffnung des Aufnahmeteils liegendem Bolzen beziehungsweise Drehachse ein gewisses Spiel zwischen der Drehachse und dem Aufnahmeteil nicht vermeidbar ist, ist mit der bekannten Ausgestaltung des Außenscharniers noch der Nachteil einer mit entsprechenden Schwingungen auftretenden unerwünschten Geräuschentwicklung während des Betriebs des Kraftfahrzeuges verbunden.

Aus der DE 102 15 224 C1 ist eine Schwenklagerung einer umklappbaren Fondsitzlehne bekannt, bei welcher in die in einem fahrzeugfesten Aufnahmeteil ausgebildete, einseitig offene Lageröffnung ein ebenfalls einseitig offenes Lagerelement eingesetzt ist, welches über an ihm ausgebildete elastische Vorsprünge mit in den die Lageröffnung einschließenden Seitenwänden ausgebildeten Ausnehmungen verrastet und so verdrehsicher in der Lageröffnung festgelegt ist. Im Anschluss an das im Wege der Montage der Rückenlehne erfolgende Einführen der Drehachse in die Öffnung des Lagerelements muss ein an dem Lagerelement schwenkbeweglich angeordneter Verriegelungshebel geschlossen und mit dem Aufnahmeteil verrastet werden, damit eine gesicherte Festlegung der Drehachse in dem Lagerelement gegeben ist. Hieraus ergibt sich, dass die Herstellung des Lagerelements mit daran einstückig angebrachtem Verriegelungshebel aufwendig ist; ferner ist mindestens ein zusätzlicher Montageschritt mit dem Schließen des Verriegelungshebels erforderlich.

Weiterhin ist in der FR 2 871 865 A1 eine Drehgelenkvorrichtung für eine Rücksitzlehne eines Kraftfahrzeuges beschrieben, bei der eine Achse in einem Lagerelement angeordnet ist und das Lagerelement über elastische Befestigungsmittel in einer Trägernut eines Aufnahmeteils befestigt ist. Das Lagerelement weist jedoch eine Verdrehsicherung für die Achse auf, so dass gerade keine Drehung der Achse in dem Lagerelement möglich ist. Außerdem wird durch das Lagerelement mit seinen elastischen Befestigungsmitteln keinerlei Vorspannung zwischen der Achse und dem Aufnahmeteil bzw. der Trägernut hergestellt.

Aus der DE 196 01 367 A1 ist schließlich eine Halterung für eine daran schwenkbar angeordnete Rückenlehne eine Fahrzeugsitzes bekannt, bei welcher ein seitlich der Rückenlehne angeordneter Zapfen in einer nach oben offenen Lageröffnung der Halterung mittels eines auf dem Zapfen angeordneten, elastisch verformbaren Verankerungsteils gehalten ist.

Der Erfindung liegt daher die Aufgabe zugrunde, bei einem gattungsgemäßen Außenscharnier mit daran montierter Rückenlehne das Auftreten von Lagergeräuschen weitgehend zu vermeiden.

Die Aufgabe wird durch ein Außenscharnier mit den Merkmalen des Anspruchs 1 gelöst; vorteilhafte Ausgestaltungen und Weiterbildungen der Erfindung sind in den Unteransprüchen angegeben.

Die Erfindung sieht in ihrem Grundgedanken vor, dass auf der Drehachse der Rückenlehne ein Lagerelement zur Vormontage unverlierbar gehalten ist, welches einen in Richtung des Einführschlitzes vorstehenden und bei in der Lageröffnung eingesetzter Drehachse in dem Einführschlitz liegenden Ansatz aufweist, an dem beidseitig in Richtung der den Einführschlitz einfassenden Seitenwände des Aufnahmeteils vorspringende elastisch verformbare Vorsprünge ausgebildet sind, die bei in die Lageröffnung eingesetzter Drehachse in in den Seitenwänden ausgebildeten Ausnehmungen federnd eingreifen.

Mit der Erfindung ist zunächst der Vorteil verbunden, dass von dem auf der Drehachse angeordneten Lagerelement über dessen federnde Abstützung an den die Einführöffnung einfassenden Seitenwänden des Aufnahmeteils eine federnde Vorspannung auf die in der Lageröffnung liegende Drehachse mit einem entsprechenden Toleranzausgleich ausgeübt wird, so dass spielbedingte Klappergeräusche vermieden sind. Als weiterer Vorteil kommt hinzu, dass bei der Montage der Drehachse in dem Aufnahmeteil das Lagerelement mit dem daran ausgebildeten Ansatz für eine Selbstjustierung der Drehachse zum Aufnahmeteil sorgt, so dass aufgrund des auf der Drehachse sitzenden Lagerelements auch eine Vereinfachung und Verbesserung der Montage gegeben ist.

Nach einer Ausgestaltung der Erfindung ist hinsichtlich der Ausbildung des Lagerelements vorgesehen, dass der an dem Lagerelement ausgebildete Ansatz die Form einer sich durch den Einführschlitz erstreckenden offenen Raute aufweist, deren beidseitig vorstehende äußere Eckpunkte die in die Ausnehmungen des Aufnahmeteils einrastenden Vorsprünge ausbilden. Hiermit ist der Vorteil verbunden, dass bei dem Einschieben der Drehachse mit dem Lagerelement in den Einführschlitz des Aufnahmeteils die äußeren Eckpunkte des rautenförmigen Ansatzes des Lagerelements nach innen ausweichen, so dass sich der rautenförmige Ansatz der Längserstreckung des Einführschlitzes anpasst, bis die äußeren Eckpunkte die in den Seitenwänden des Aufnahmeteils ausgebildeten Ausnehmungen erreicht haben und federnd nach außen in die Ausnehmungen einschnappen. Gleichzeitig ergeben sich durch die Rautenform an der äußeren Kontur des Lagerelements automatisch entsprechende Schrägflächen, die ein Einsetzen des Lagerelementes in den Einführschlitz und ein Zusammendrücken der Eckpunkte erleichtern. Damit ist automatisch auch eine Zentrierung und Selbstjustierung des Lagerelements beziehungsweise der Drehachse beim Einsetzen in das Aufnahmeteil verbunden.

Nach einer Ausgestaltung der Erfindung ist vorgesehen, dass das Lagerelement aus einer den Ansatz tragenden Hülse besteht, die auf die Drehachse der Rückenlehne aufschiebbar ist. Zur Verbesserung der Montage des Außenscharniers kann dabei vorgesehen sein, dass das Lagerelement mit der Drehachse über jeweils ausgebildete Rastgestaltungen verrastbar und damit an der Drehachse vormontierbar ist.

Zur Verbesserung der Führung des Lagerelementes bei dessen Montage an dem Aufnahmeteil kann nach einer Ausgestaltung der Erfindung vorgesehen sein, dass das Lagerelement an seinen beiden stirnseitigen Enden jeweils einen radial vorspringenden Kranz aufweist, wobei die endseitigen Kränze bei in die Lageröffnung eingesetzter Drehachse die Wandung des Aufnahmeteils und die daran schwenkbar gelagerte Sperre zwischen sich zentrierend aufnehmen.

Hierbei kann das Lagerelement derart ausgestaltet sein, dass der der Sperre unmittelbar benachbarte Kranz in eine parallel zum Ansatz des Lagerelements verlaufende Platte übergeht und der Ansatz gegenüber dem gegenüberliegenden Kranz derart versetzt angeordnet ist, dass der Ansatz bei montiertem Außenscharnier innerhalb des Einführschlitzes des Aufnahmeteils liegt.

Gemäß einer Ausgestaltung der Erfindung ist das Lagerelement als ein einstückig geformtes Kunststoffteil ausgebildet.

Gemäß einer bevorzugten Ausgestaltung der Erfindung ist die Drehachse als eine in die Rückenlehnenstruktur einschraubbare Schraube ausgebildet, auf deren Schraubenschaft das Lagerelement aufschiebbar ist. Hierbei kann in vorteilhafter Weise vorgesehen sein, dass der Schraubenkopf der die Drehachse bildenden Schraube von dem ihm zugewandten stirnseitigen und die Platte tragenden Kranz des Lagerelements bündig aufgenommen ist, so dass eine kompakte Befestigung ohne scharfe vorstehende Kanten gegeben ist.

In der Zeichnung ist ein Ausführungsbeispiel der Erfindung wiedergegeben, welches nachstehend beschrieben ist. Es zeigen:
- Fig. 1: ein teilweise dargestelltes Aufnahmeteil eines Außenscharniers mit dem auf einer Drehachse vormontierten Lagerelement vor der Montage der Drehachse im Aufnahmeteil in einer rückenlehnenseitigen Perspektivansicht,
- Fig. 2: den Gegenstand der Figur 1 in einer Ansicht auf die Außenseite des Außenscharniers,
- Fig. 3: das auf einer Drehachse montierte Lagerelement in einer perspektivischen Einzeldarstellung,
- Fig. 4: eine Ansicht der in dem Aufnahmeteil montierten Drehachse mit Lagerelement in einer Figur 1 entsprechenden Darstellung.

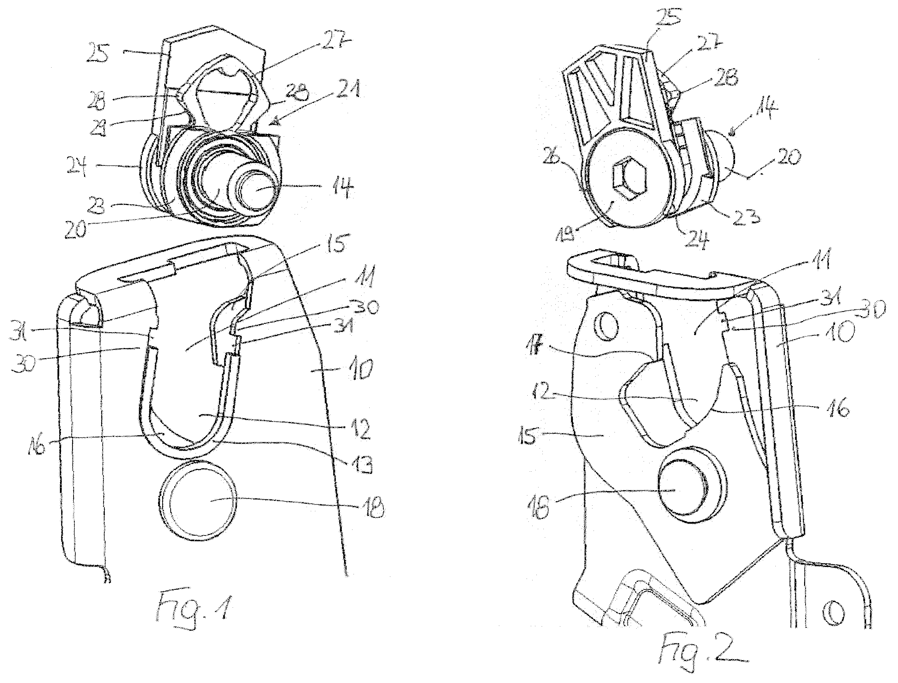

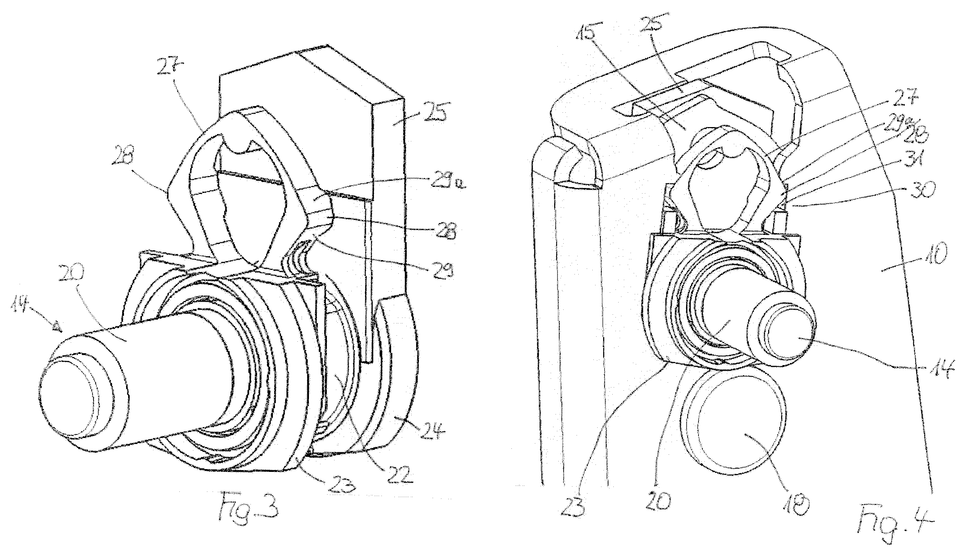

In den Figuren 1 und 2 ist zunächst ein Aufnahmeteil 10 in einer Teildarstellung mit seinem der Fixierung und Lagerung der nicht dargestellten Rückenlehne dienenden Lagerschenkel dargestellt. In dem Aufnahmeteil 10 ist ein zur Außenseite des Aufnahmeteils 10 offener Einführschlitz 11 ausgebildet, der in eine Lageröffnung 12 zur Aufnahme einer Drehachse 14 einmündet. Der geschlossene Bereich der Lageröffnung 12 ist dabei durch ein Lagersegment 13 ausgekleidet. Wie sich näher aus Figur 2 entnehmen lässt, ist die Drehachse 14 in der Lageröffnung 12 mittels einer um eine an dem Aufnahmeteil 10 ausgebildete Drehachse 18 schwenkbaren Sperre 15 festlegbar, die in der aus Figur 2 ersichtlichen offenen Stellung mit einem Ansatz 16 in die Lageröffnung 12 hineinragt. Hierdurch wird erreicht, dass beim Hineindrücken der Drehachse 14 in den Einführschlitz 11 mit daran anschließender Lageröffnung 12 die Drehachse 14 auf den Ansatz 16 der Sperre 15 drückt und diese soweit verschwenkt, dass der an der Sperre 15 ausgebildete Haken 17 über die in der Lageröffnung 12 liegende Drehachse 14 greift (Figur 4).

Bei dem dargestellten Ausführungsbeispiel ist die Drehachse 14 als Schraube mit einem Schraubenkopf 19 und einem Schraubenschaft 20 ausgebildet. Mit ihrem Schraubenschaft 20 ist mittel eines daran nicht weiter dargestellten Gewindes die Drehachse 14 in die Struktur einer nicht dargestellten Rückenlehne einschraubbar, bevor die Rückenlehne in dem Aufnahmeteil 10 montiert wird.

Auf den Schraubenschaft 20 der als Schraube ausgebildeten Drehachse 14 ist ein Lagerelement 21 mit einer an ihm ausgebildeten Hülse 22 aufgeschoben, wobei in einer nicht dargestellten Weise an der Innenwand der Hülse 22 und an dem Schraubenschaft 20 einander zugeordnete Rastgestaltungen in Form von Vorsprüngen/Nuten ausgebildet sein können, um eine unverlierbare Halterung des Lagerelements 21 auf dem Schraubenschaft 20 zum Zwecke einer Vormontage zu ermöglichen. An den jeweils äußeren, stirnseitigen Enden der an dem Lagerelement 21 ausgebildeten Hülse 22 sind ein innerer Kranz 23 und einer äußerer Kranz 24 angeordnet, die der Zentrierung und axialen Fixierung des Lagerelements 21 mit daran fixierter Drehachse 14 in Einführschlitz 11 und Lageröffnung 12 dienen. Hierzu nehmen die endseitigen Kränze 23 und 24 bei in die Lageröffnung 12 eingesetzter Drehachse 14 die Wandung des Aufnahmeteils 10 und die daran schwenkbar gelagerte Sperre 15 zwischen sich auf. Gleichzeitig sorgen die endseitigen Kränze 23 und 24 beim Einschieben der Drehachse 14 mit Lagerelement 21 in den Einführschlitz 11 für eine entsprechende Zentrierung gegenüber dem Aufnahmeteil 10. Um diese Zentrierung zu verbessern, geht von dem außenliegenden Kranz 24 eine aufragende und sich in der Längsrichtung des Einführschlitzes 11 erstreckende Platte 25 aus. Auf der Außenseite des Lagerelementes 21 ist in dessen äußerem Kranz 24 beziehungsweise Platte 25 eine Einsenkung 26 zur Aufnahme des Schraubenkopfes 20 bei auf die Drehachse 14 aufgeschobenem Lagerelement 21 ausgebildet, so dass sich eine bündige Aufnahme der Drehachse 14 in dem Lagerelement 21 ergibt.

Weiterhin weist das Lagerelement 21 einen sich parallel und mit Abstand zur Platte 25 in der Längsrichtung des Einführschlitzes 11 erstreckenden Ansatz 27 auf, der die Form einer offenen Raute aufweist, deren beidseitig zu den den Einführschlitz 11 einschließenden Seitenwänden 30 des Aufnahmeteils 10 vorstehende äußere Eckpunkte Vorsprünge 28 ausbilden, denen in den Seitenwänden 30 des Aufnahmeteil 10 Ausnehmungen 31 zugeordnet sind, in welche bei in der Lageröffnung 12 liegender Dtehachse 14 die Vorsprünge 28 des Lagerelements 21 federnd einrasten. Über die federnd ausgebildeten Vorsprünge wird eine Vorspannung zwischen dem Aufnahmeteil 10 und der Drehachse 14 hergestellt, über welche die Drehachse 14 in das Tiefste der Lageröffnung 12 des Aufnahmeteils 10 hineingedrückt ist, so dass aufgrund der eingestellten Vorspannung schwingungsbedingte Klappergeräusche vermieden sind. Aufgrund der Rautenform des Ansatz 27 ergeben sich an die Vorsprünge 28 anschließende Schrägflächen 29, die einerseits beim Hineinführen der Drehachse 14 mit Lagerelement 21 in den Einführschlitz 11 das Zusammendrücken des rautenförmigen Ansatzes 27 begünstigen und dabei gleichzeitig auch eine Führung und Zentrierung des Lagerelementes 21 in dem Einführschlitz 11 bewirken, so dass durch die Anordnung des Lagerelements 21 auf der Drehachse 14 die Montage der Drehachse 14 an dem Aufnahmeteil 10 verbessert ist. Andererseits sorgen die oberhalb der Vorsprünge 28 angeordneten Schrägflächen 29a für eine Abstützung des Ansatzes 27 gegen die Kanten der Ausnehmungen 31 im Aufnahmeteil 10, so dass bei Belastung aus Richtung der Lageröffnung 12 die Vorsprünge 28 nach außen gedrückt werden.

## Patentansprüche

1. Außenscharnier zur schwenkbaren Halterung der Rückenlehne eines Fahrzeugsitzes an einem fahrzeugfesten Teil, bei welchem an der Rückenlehne eine Drehachse (14) zu deren Verschwenkung befestigt ist, die in ein eine einseitig offene Lageröffnung (12) aufweisendes, an dem Fahrzeug zu befestigendes Aufnahmeteil (10) einsetzbar und darin mittels einer die offene Seite der Lageröffnung (12) übergreifenden und zwischen einer Freigabestellung und einer Verriegelungsposition schwenkbaren Sperre (15) verriegelbar ist, wobei in dem Aufnahmeteil (10) ein in die Lageröffnung (12) führender Einführschlitz (11) für die Drehachse (14) ausgebildet ist, **dadurch gekennzeichnet, dass** auf der Drehachse (14) der Rückenlehne ein Lagerelement (21) zur Vormontage unverlierbar gehalten ist, welches einen in Richtung des Einführschlitzes (11) vorstehenden und bei in der Lageröffnung (12) eingesetzter Drehachse (14) in dem Einführschlitz (11) liegenden Ansatz (27) aufweist, an dem beidseitig in Richtung der den Einführschlitz (11) einfassenden Seitenwände (30) des Aufnahmeteils (10) vorspringende elastisch verformbare Vorsprünge (28) ausgebildet sind, die bei in die Lageröffnung (12) eingesetzter Drehachse (14) in in den Seitenwänden (30) ausgebildeten Ausnehmungen (31) federnd eingreifen.

2. Außenscharnier nach Anspruch 1, **dadurch gekennzeichnet, dass** der an dem Lagerelement (21) ausgebildete Ansatz (27) die Form einer sich durch den Einführschlitz (11) erstreckenden offenen Raute aufweist, deren beidseitig vorstehende äußere Eckpunkte die in die Ausnehmungen (31) des Aufnahmeteils (10) einrastenden Vorsprünge (28) ausbilden.

3. Außenscharnier nach Anspruch 1 oder 2, **dadurch gekennzeichnet, dass** das Lagerelement (21) aus einer den Ansatz (27) tragenden Hülse (22) besteht, die auf die Drehachse (14) der Rückenlehne aufschiebbar ist.

4. Außenscharnier nach Anspruch 3, **dadurch gekennzeichnet, dass** das Lagerelement (21) mit der Drehachse (14) über jeweils ausgebildete Rastgestaltungen verrastbar ist.

5. Außenscharnier nach einem der Ansprüche 1 bis 4, **dadurch gekennzeichnet, dass** das Lagerelement (21) an seinen beiden stirnseitigen Enden jeweils einen radial vorspringenden Kranz (23, 24) aufweist, wobei die endseitigen Kränze (23, 24) bei in die Lageröffnung (12) eingesetzter Drehachse (14) die Wandung des Aufnahmeteils (10) und die daran schwenkbar gelagerte Sperre (15) zwischen sich zentrierend aufnehmen.

6. Außenscharnier nach Anspruch 5, **dadurch gekennzeichnet, dass** der der Sperre (15) unmittelbar benachbarte Kranz (24) in eine parallel zum Ansatz (27) des Lagerelements (21) verlaufende Platte (25) übergeht und der Ansatz (27) gegenüber dem gegenüberliegenden Kranz (23) derart versetzt angeordnet ist, dass der Ansatz (27) bei montiertem Außenscharnier innerhalb des Einführschlitzes (11) des Aufnahmeteils (10) liegt.

7. Außenscharnier nach einem der Ansprüche 1 bis 6, **dadurch gekennzeichnet, dass** das Lagerelement (21) als einstückig geformtes Kunststoffteil ausgebildet ist.

8. Außenscharnier nach einem der Ansprüche 1 bis 7, **dadurch gekennzeichnet, dass** die Drehachse (14) als eine in die Rückenlehnenstruktur einschraubbare Schraube ausgebildet ist, auf deren Schraubenschaft (20) das Lagerelement (21) aufschiebbar ist.

9. Außenscharnier nach Anspruch 8, **dadurch gekennzeichnet, dass** der Schraubenkopf (19) der die Drehachse (14) bildenden Schraube von dem ihm zugewandten stirnseitigen und die Platte (25) tragenden Kranz (24) des Lagerelements (21) bündig aufgenommen ist.

## Claims

1. Outer hinge for a pivotable holding of a backrest of a vehicle seat on a part that is secured to a vehicle, whereby a pivot member (14) for allowing pivoting of a backrest is secured to the backrest, which is insertable into a receiving element (10) configured to be secured to a vehicle and having a bearing opening (12) that is open on one side, the pivot member (14) being arrestable therein by an arresting mechanism (15) extending over the open side of the bearing opening (12) and being pivotable between a released position and an arresting position, whereby the receiving element (10) has an introduction slot (11) for the pivot member (14) leading into the bearing opening (12), **characterized in that** for pre-assembling a bearing element (21) is disposed on the pivot member (14) in a manner that it cannot be lost which is provided with an extension (27) protruding into the direction toward the introduction slot (11) and, when the pivot member (14) is inserted into the bearing opining (12), juts into the introduction slot (11), wherein elastically deformable projections (28) are formed on the extension (27) that protrude in the direction toward side walls (30) that enclose the introduction slot (11) and which resiliently engage into recesses (31) of the side walls (30) when the pivot member (14) is inserted into the bearing opening (12).

2. Outer hinge according to claim 1, **characterized in that** the extension (27) formed on the bearing element (21) has the shape of an open rhombus, extending through the introduction slot (11), wherein outer corner points that jut out on opposite sides of the rhombus form the projections (28) that are adapted to engage into the recesses (31) of the side walls (30) of the receiving element (10).

3. Outer hinge according to claim 1 or 2, **characterized in that** the bearing element (21) is comprised of a sleeve (22) that carries the extension (27) and that is adapted to be pressed onto the pivot member (14) of the backrest.

4. Outer hinge according to claim 3, **characterized in that** the bearing element (21) and the pivot member (14) are adapted to be retained in an arresting manner via respective arresting or detention structures.

5. Outer hinge according to one of the claims 1 to 4, **characterized in that** the bearing element (21) is provided with two frontal ends, on each of which is provided a radially projecting ring (23, 24), and wherein when the pivot member (14) is inserted into the bearing opening (12), the rings (23, 24) accommodate between them, in a centering manner, a wall of the receiving element (10) and the arresting mechanism (15) that is pivotable disposed thereon.

6. Outer hinge according to claim 5, **characterized in that** the ring (24) that is disposed directly adjacently to the arresting mechanism (15) merges into a plate (25) that extends parallel to the extension (27) of the bearing element (21), and wherein the extension (27) is offset relative to the opposite ring (23) in such a way that when the outer hinge is assembled, the extension (27) is disposed within the introduction slot (11) of the receiving element (10).

7. Outer hinge according to one of the claims 1 to 6, **characterized in that** the bearing element (21) is configured as a monolithic part made of polymeric material.

8. Outer hinge according to one of the claims 1 to 7, **characterized in that** the pivot member (14) is configured as a bolt that can be threaded into a structure of a backrest and that has a bolt shaft (20) onto which the bearing element (21) is adapted to be pushed.

9. Outer hinge according to claim 8, **characterized in that** the bolt that forms the pivot member (14) has a bolt head (19) that is snugly accommodated by the frontal ring (24) of the bearing element (21) that faces the bolt head (19) and that carries the plate (25).

## Revendications

1. Charnière extérieure pour la fixation pivotable du dossier d'un siège de véhicule sur une partie fixe sur le véhicule, pour laquelle un axe de rotation (14)est fixé au dossier pour sont basculement, qui peut être inséré dans une pièce de logement (10) à fixer au véhicule comportant une ouverture d'appui (12) ouverte d'un côté et peut être verrouillé dedans au moyen d'un blocage (15) pivotable recouvrant le côté ouvert de l'ouverture d'appui (12) et entre une position de dégagement et une position de verrouillage, pour laquelle une fente d'introduction (11) pour l'axe de rotation (14) guidant dans l'ouverture d'appui (12) est constituée, **caractérisée en ce que** sur l'axe de rotation (14) du dossier un élément d'appui (21) pour prémontage est fixé de manière imperdable, lequel comporte un appendice (27) reposant dans la fente d'introduction (11), ressortant dans la direction de la fente d'introduction (11) et lorsque l'axe de rotation (14) est inséré dans l'ouverture d'appui (12), sur laquelle sont constituées des saillies (28) élastiquement déformables ressortant des deux côtés en direction des parois latérales (30) de la pièce de logement (10), bordant la fente d'introduction (11), qui viennent en prise d'une manière faisant ressort dans les évidements (31) constitués dans les parois latérales (30), lorsque l'axe de rotation (14) est inséré dans l'ouverture d'appui (12).

2. Charnière extérieure selon la revendication 1 **caractérisée en ce que** l'appendice (27) constitué sur l'élément d'appui (21) présente la forme d'un losange ouvert s'étendant à travers la fente d'introduction (11) dont les points angulaires extérieurs ressortant des deux côtés constituent les parties en saillie s'enclenchant dans les évidements (31) de la pièce de logement (10).

3. Charnière extérieure selon la revendication 1 ou 2 **caractérisée en ce que** l'élément d'appui (21) est composé d'un manchon (22) portant l'appendice (27) qui peut coulisser sur l'axe de rotation (14) du dossier.

4. Charnière extérieure selon la revendication 3 **caractérisée en ce que** l'élément d'appui (21) peut être enclenché avec l'axe de rotation (14) sur les structures de cran respectivement constituées.

5. Charnière extérieure selon l'une quelconque des revendications 1 à 4 **caractérisée en ce que** l'élément d'appui (21) comporte respectivement sur ses deux extrémités frontales une couronne (23, 24) ressortant radialement, pour laquelle les couronnes (23, 24) en extrémité reçoivent se centrant entre eux, la paroi de la pièce de logement (10) et le blocage (15) s'appuyant dessus de façon pivotable, lorsque l'axe de rotation (14) est inséré dans l'ouverture d'appui (12).

6. Charnière extérieure selon la revendication 5 **caractérisée en ce que** la couronne (24) directement voisine du blocage (15) passe dans une plaque (25) passant parallèlement à l'appendice (27) de l'élément d'appui (21) et l'appendice (27) est disposé de façon déportée par rapport à la couronne (23) opposée de telle manière que l'appendice (27) se trouve à l'intérieur de la fente d'introduction (11) de la pièce de logement (10) lorsque la charnière extérieure est montée.

7. Charnière extérieure selon l'une quelconque des revendications 1 à 6 **caractérisée en ce que** l'élément d'appui (21) est constitué comme une pièce en matière plastique moulée en une seule pièce.

8. Charnière extérieure selon l'une quelconque des revendications 1 à 7 **caractérisée en ce que** l'axe de rotation (14) est constitué comme une vis vissable dans la structure du dossier sur la tige de vis (20) de laquelle l'élément d'appui (21) peut coulisser.

9. Charnière extérieure selon la revendication 8 **caractérisée en ce que** la tête de vis (19) de la vis formant l'axe de rotation (14) est logée de manière affleurante par la couronne (24) frontale de l'élément d'appui (21), tournée vers elle et portant la plaque (25).
